# EUROPEAN PATENT APPLICATION

(11) **EP 0 855 607 A2**
(43) Date of publication of application: **29.07.1998**
(21) Application number: 98300619.8
(22) Date of filing: 28.01.1998
(51) Int. Cl.: G02B 6/293

(54) **Variable wavelenght optical filter**

(30) Priority: 28.01.1997 JP 14286/97
(71) Applicant: NEC CORPORATION, Tokyo (JP)
(72) Inventor: Fujita, Masayuki, Minato-ku, Tokyo (JP)
(74) Representative: Moir, Michael Christopher

(57) **Abstract**

A variable wavelength optical filter comprises first and second optical fibers, which are arranged in parallel with each other, light-reflecting means, and an optical filter plate. The surface of the optical filter plate is parallel with a line, which is perpendicular to both the first and second optical fibers, and almost perpendicular to a plane, which is determined by the optical axes of both the first and second optical fibers. The optical filter plate rotates around an axis, which runs in parallel with the aforementioned plane determined by both the optical axes, and thereby an incidence angle of a light beam incident on the optical filter plate is adjusted. A λ/4 - plate or a λ/8 - plate is further inserted between light-reflecting means and the optical filter plate.

## Description

The invention relates to a variable wavelength optical filter in particular to a variable wavelength optical filter used in a wavelength division multiplexed optical communication system.

In a wavelength division multiplexed (WDM, hereinafter) optical communication system, in which plural optical signals with different wavelengths are multiplexed and transmitted through a single optical fiber, optical band pass filters for extracting the optical signals with the desired wavelengths are necessary in an optical receiver. In case that the center wavelength of the passing band of the optical filter is fixed if the wavelength of the optical signal is changed due to secular degradation of an signal light source in an optical transmitter or change of ambient temperature, the transmission loss of the optical band pass filter steeply increases.

Accordingly, it is desirable that the optical receiver is provided with the optical band pass filters, in which center wavelengths of the passing bands can be respectively adjusted.

In a conventional variable wavelength optical filter disclosed in Japanese Patent Kokai No. 7-198936, an optical filter element is fabricated by coating a convex glass with a dielectric layered film, the optical filter element is inserted between the optical fibers opposed to each other, and the center wavelength of the passing band of the optical filter element is changed in accordance with incidence angle of the light beam incident on the surface of the optical filter element and can be adjusted by shifting the position of the optical filter element by means of a piezoelectric actuator.

In a conventional variable wavelength optical filter disclosed in Japanese Patent Kokai No. 5.005805, an optical filter plate and an optical path-compensating plate are inserted between two optical fibers opposed to each other, and the center wavelength of a passing band is changed in accordance with the incidence angle of a light beam incident on the optical filter plate, where the incidence angle is adjusted by rotating the optical filter plate, and shift of the optical path caused by rotation of the optical filter plate cab be compensated by rotating the optical path-compensating plate.

A variable wavelength filter disclosed in Japanese Patent Kokai No. 56-162701 utilizes a phenomenon that rotation of polarization of a light beam propagating through an optically active substance changes in accordance with the wavelength of the light beam. Moreover, in a variable wavelength optical filter disclosed in Japanese Patent Kokai No. 8-110487, an input light beam is supplied to an optical polarization beam splitter, which makes only a light beam with a particular polarization transmit therethrough; and an optical filter plate, a λ/4 - plate and a planar mirror are successively arranged along an optical path. The center wavelength of the passing band of the variable wavelength optical filter can be adjusted by rotating the optical filter plate around a certain axis.

Among the various variable wavelength optical filters mentioned in the above, the one disclosed in Japanese Patent Kokai No. 8-110487 has following advantages. The light beam transmitted through the optical polarization beam splitter has passed the optical filter plate two times on its going and returning ways, and the shifts of the optical paths caused by rotation of the optical filter plate can be compensated. Accordingly, change of an optical coupling loss between the input and output optical fibers caused by rotation of the optical filter plate can be avoided. Moreover, since the light beam transmits through the optical filter plate two times, the spectrum of the transmission loss of this variable wavelength optical filter is steep and has a narrow full-width-half maximum.

However, the conventional variable wavelength optical filters mentioned in the above have following disadvantages. In the variable wavelenth optical filter disclosed in Japanese Patent Kokai No. 7-198936, since the incidence angle of the light beam incident on the convex glass optical filter element is changed by shifting the same, the optical path of the light is changed in accordance with the shift of the optical filter element, hence the optical coupling loss between the input and output optical fibers increases.

Moreover, in case that the incidence angle of the incident light beam increases, the transmission coefficient of the optical filter employing the dielectric layered film changes dependently on change of the state of polarization of the incident light beam in general. In other words, a polarization-dependent loss (a PDL, hereinafter) of the optical filter caused by change of the state of polarization of the incident light beam increases as the incidence angle increases.

In the variable wavelength optical filter disclosed in Japanese Patent Kokai No. 5-005805, since the optical path-compensating plate must be added to the optical filter plate, the structure becomes complicated. Moreover, since the rotational angle of the optical path-compensating plate must be adjusted in accordance with the rotation of the optical filter plate, adjustment and control of the optical filter becomes complicated.

Furthermore, the PDL of the optical filter increases as the incidence angles of the light beam incident on the optical filter plate and the optical path-compensating plate increase similarly to the case of the aforementioned variable wavelength optical filter.

In the variable wavelength optical filter disclosed in Japanese Patent Kokai No. 56-162701, which utilizes the phenomenon that polarization of a light beam rotates dependently on the wavelength of the light beam in an optically active substance, the limit of resolution is several nm at best. Accordingly it is difficult to apply the aforementioned variable wavelength optical filter to a WDM optical communication system, in which a desired optical signal is extracted from other optical signals arranged at wavelength spacings of 0.1 to 1 nm.

In the variable wavelength optical filter disclosed in Japanese Patent Kokai No 8-110487, the input light beam is supplied to the optical polarization beam splitter and only the light beam polarized in a particular direction is extracted. Accordingly, when the light beam is circularly or elliptically polarized, or non-polarized, the loss of the optical polarization beam splitter increases. Since the state of polarization of the input optical signal transmitted through an optical transmission line varies with the passage of time, the loss of the optical signal in the optical polarization beam splitter increases.

Accordingly, it is an object of at least the preferred embodiments of the present invention to provide a variable wavelength optical filter, a transmission loss of which is not changed when a central wavelength of a passing band of the variable wavelength optical filter is changed.

The present invention provides a variable wavelength optical filter comprising first and second optical fibers arranged in parallel, light-reflecting means for reflecting a light beam emitted from an output end of said first optical fiber so that the reflected light beam is incident on an input end of said second optical fiber with its optical axis co-axial with the optical axis of said second optical fiber, an optical filter plate between said light-reflecting means and said first and second optical fibers, a surface of said optical filter plate being substantially parallel to a line perpendicular to both optical axes of said first and second optical fibers, and means for rotating said optical filter plate around an axis parallel to said line perpendicular to both said optical axes.

According to a preferred embodiment of the invention, a wavelength variable optical filter comprises;
first and second optical fibers, both being arranged in parallel with each other,
light-reflecting means for so reflecting a light beam emitted from an output end of the first optical fiber (a first light beam, hereinafter) that an optical axis of a light beam incident on an input end of the second optical fiber (a second light beam, hereinafter) coincides with an optical axis of the second optical fiber;
an optical filter plate allocated between the light-reflecting means and the first and second optical fibers, a surface of the optical filter plate being parallel with a line perpendicular to both optical axes of the first and second optical fibers, and
means for rotating the optical filter plate around an axis running in parallel with the line perpendicular to both the optical axes.

Preferred features of the present invention will now be described, purely by way of example only, with reference to the accompanying drawings, in which:-
FIGs. 1A and 1B are diagrams for showing a structure of the first preferred embodiment of the invention, where FIG. 1A shows a planar view of the first preferred embodiment and FIG. 1B shows a side projection view of the same,
FIG. 2 is a diagram for showing a structure of the second preferred embodiment of the invention, and
FIG. 3 is a diagram for showing a structure of the third preferred embodiment of the invention.

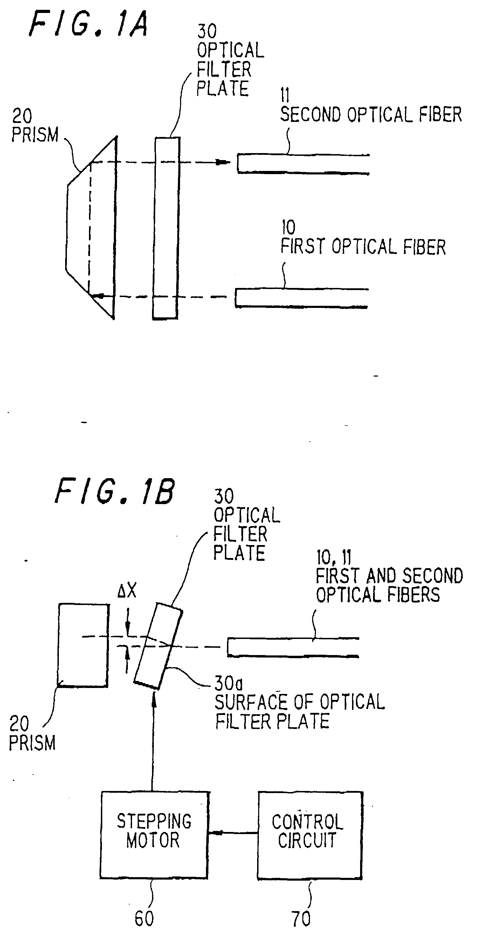

As shown in FIGs. 1A and 1B, a light beam emitted from the first optical fiber 10 transmits through a filter plate 30 and is reflected by a prism 20. The light beam reflected by the prism 20 again transmits through the optical fiber plate 30 and enters the second optical fiber 11 at its input end. The first and second optical fibers, 10 and 11, respectively run in parallel with the light beam emitted from the first optical fiber 10 and the other light beam incident on the input end of the second optical fiber 11.

If the incidence angle of the light beam incident on the optical filter plate 30 is changed by rotating the optical filter plate 30 around an axis, which is perpendicular to both the optical axes of the first and second optical fibers 10 and 11, the center wavelength of the passing band of the optical filter plate 30 can be adjusted. A similar effect can be obtained by rotating the optical filter plate 30 around another axis, which is parallel with the aforementioned rotational axis. Since the optical filter place 30 rotates around the axis, which is perpendicular to both the optical axes of the first and second optical fibers, 10 and 11, the absolute values of the incidence angles of the two aforementioned light beam incident on the optical filter plate 30 are the same. Accordingly, the spectrums of the two light beams, which are respectively transmitted through the optical filter plate 30 in the forward and backward directions, are the same. Then, the full-width-half maximum of the spectrum of a transmission loss between the input end of the first optical fiber 10 and the output end of the second optical fiber 11 is half of that of a light beam transmitted through the optical filter plate 30 once. A variable wavelength optical filter having a sharp band-pass characteristic can be obtained in this way.

In the optical configuration shown in FIGs. 1A and 1B, it should be noted that the surface 30a of the optical filter plate 30 is parallel with a line perpendicular to both the optical axes of the first and second optical fibers, 10 and 11.

Since the absolute values of the incidence angles of both the light beams incident on the optical filter plate 30 are the same, the shifts of the optical paths of both the light beams caused by rotation of the optical filter plate 30 can be compensated. The principle of this fact will be explained in FIG. 1B. FIG. 1B is the side projection view of the optical configuration of the wavelength variable optical filter 30. The optical path of the light beam transmitted through the optical filter plate 30 is shifted upward in parallel with the optical path of the light beam emitted from the first optical fiber 10 by Δx.

Viewed in a side projection drawing, FIG. 1B, the light beam, which is reflected by the prism 20 and again transmits through the optical filter plate 30, traces the same optical path as that of the incident light beam from the first optical fiber 10 on the optical filter plate 30 in the reverse direction. The optical path of the light beam transmitted through the optical filter plate 30 in the reverse direction is shifted downward in parallel with the light beam reflected by the prism 20, hence the upward shift of the incident light beam from the first optical fiber 10 on the optical filter plate 30 is cancelled. That is to say, the optical axis of the incident light beam on the input end of the second optical fiber 11 is not changed by the rotation of the optical filter plate 30, and an optical coupling loss between the first and second optical fibers, 10 and 11, is kept to be constant.

The construction of the first preferred embodiment will be explained in more detail referring to FIG. 1B. The first and second optical fibers, 10 and 11, are arranged in parallel with each other. The light beam emitted from the output end of the first optical fiber 10 is reflected by the prism 20 and enters the second optical fiber 11 at its input end. The optical filter plate 30 is inserted between the prism 20 and the first and second optical fibers, 10 and 11, and rotated around the axis, which is perpendicular to both the first and second optical fibers, 10 and 11. By changing the incidence angles of the light beams incident on the optical filter plate 30, the center wavelength of the passing band of the optical filter plate 30 can be changed.

In this structure, the optical filter itself is provided with the function of compensating the effects of the shifts of the optical paths of the light beams. Accordingly, the adjust of the center wavelength of the passing band can be easily carried out, even when the plural filter plates are used, because each of the optical filter plates can be separately adjusted.

In FIGs. 1A and 1B, the first and second optical fibers, 10 and 11, are single mode optical fibers. The optical filter plate 30 can be fabricated by coating an optical glass with a band pass filter layer composed of a dielectric layered film. Moreover, a Fabry-Perot-Etalon filter, which is fabricated by coating both the surfaces of the optical glass with reflection films, can be used for the same purpose. If the first and second optical fibers, 10 and 11, are respectively provided with lenses at their output and input ends, the optical coupling loss between these optical fibers can he decreased. The rotational angle of the optical filter plate can be adjusted by manual adjustments or electrical control means, such as a stepping motor or such like, as shown in FIG.1B.

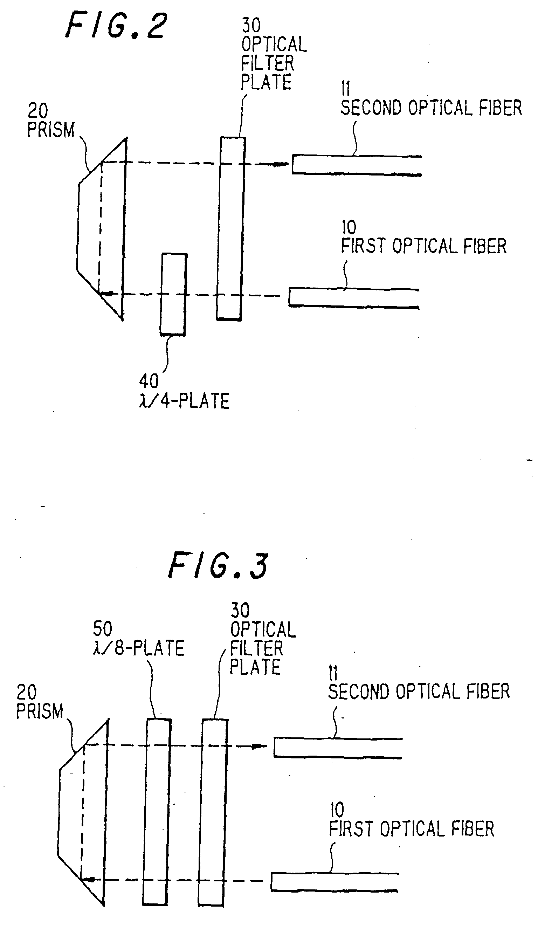

The second preferred embodiment will be explained referring to FIG. 2. A λ/4-plate 40 is added to the structure shown in FIGs. 1A and 1B between a prism 20 and an optical filter plate 30.

A light beam emitted from the optical fiber 10 successively transmits through the optical filter plate 30 and the λ/4 - plate 40, is reflected by the prism 20, and again transmits through the optical fiber plate 30. The λ/4 - plate rotates the direction of polarization of the light beam transmitted therethrough by 90° . Accordingly, even when there is a difference in the transmission loss Lp (or Ls) of the optical filter plate 30 between the two directions of the polarization of the incident light beam, a polarized component is attenuated by Ls (or Lp) in the second transmission through the same, hence the resultant loss of the light beam transmitted through the optical filter becomes Lp + Ls independently of the direction of polarization, and the effect of the polarization-dependent loss of the optical filter plate can be cancelled.

FIG. 3 shows the third preferred embodiment of the invention. In this structure, a λ/8 - plate 50 is inserted between a prism 20 and an optical filter plate 30, in stead of a λ/4 - plate 40 shown in Fig.2. The λ/8 - plate rotates the direction of the polarization of the light beam transmitting therethrough by 45 ° . The light beam, which is emitted from the first optical fiber 10 and transmitted through the optical filter plate 30, transmits through the λ/8 - plate 50 two times, till it again reaches the optical filter plate 30, and the direction of polarization of the light beam rotates by 90° . Accordingly, the PDL of the optical filter plate 30 can be cancelled similarly to the case of the embodiment shown in FIG. 2. Since a single λ/8 - plate 50 is used in this embodiment, the effects of shifts of the paths of the light beams caused by the change of an angle of elevation of the λ/8 - plate 50 can be compensated according to the same principle as that in the case of the optical filter plate 30.

Accordingly, the advantage of the variable wavelength optical coupling loss between both the optical fibers can be stabilized, even when the change of the angle of elevation of the λ/8 - plate 50 caused by the secular change of means for fixing the λ/8 - plate 50 cannot be ignored.

As explained in the above, according to the variable wavelength filter according to the invention, since the light beam transmits through the optical filter plate two times in both the forward and backward directions, the effects of the shifts of the optical paths of the forward and backward light beams caused by rotation of the optical filter plate can be compensated, and the optical coupling loss between the input and output optical fibers can be stabilized. Moreover, the full-width-half maximum of the spectrum of the light beam transmitted through the variable wavelength optical filter becomes a half of that of the optical filter plate itself, and the variable wavelength optical filter with high isolation characteristic can be obtained.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here in set forth.

Each feature disclosed in this specification (which term includes the claims) and/or shown in the drawings may be incorporated in the invention independently of other disclosed and/or illustrated features.

The text of the abstract filed herewith is repeated below as part of the specification.

A variable wavelength optical filter comprises first and second optical fibers, which are arranged in parallel with each other, light-reflecting means, and an optical filter plate. The surface of the optical filter plate is parallel with a line, which is perpendicular to both the first and second optical fibers, and almost perpendicular to a plane, which is determined by the optical axes of both the first and second optical fibers. The optical filter plate rotates around an axis, which runs in parallel with the aforementioned plane determined by both the optical axes, and thereby an incidence angle of a light beam incident on the optical filter plate is adjusted. A λ/4 - plate or a λ/8 - plate is further inserted between light-reflecting means and the optical filter plate.

## Claims

1. A variable wavelength optical filter comprising;
first and second optical fibers arranged in parallel;
light-reflecting means for reflecting a light beam emitted from an output end of said first optical fiber so that the reflected light beam is incident on an input end of said second optical fiber with its optical axis co-axial with the optical axis of said second optical fiber;
an optical filter plate between said light-reflecting means and said first and second optical fibers, a surface of said optical filter plate being substantially parallel to a line perpendicular to both optical axes of said first and second optical fibers, and
means for rotating said optical filter plate around an axis parallel to said line perpendicular to both said optical axes.

2. A filter according to Claim 1, wherein:
a rotational axis of said means for rotating said optical filter plate lies within a plane containing said optical axes.

3. A filter according to Claim 1 or 2, wherein:
said surface of said optical filter plate is substantially perpendicular to a plane containing said optical axes.

4. A filter according to any preceding claim, wherein:
said light-reflecting means is a prism comprising first and second parts;
said first part for reflecting said emitted light beam in a direction restricted by a reflection angle of 45°; and
said second part for reflecting a light beam reflected by said first part in a direction restricted by a reflection angle of 45°;
wherein a light beam reflected by said second part lies within a plane determined by the direction of said emitted light beam and the direction of said light beam reflected by said first part.

5. A filter according to Claim 4, wherein said prism has a corner angle of 90°.

6. A filter according to any preceding claim, wherein said optical filter plate is an optical dielectric filter fabricated by forming a dielectric layered film on a transparent plate having parallel sides.

7. A filter according to any of Claims 1 to 5, wherein said optical filter plate is a Fabry-Perot-Etalon filter fabricated by forming reflection films on a transparent plate having parallel sides.

8. A filter according to any preceding claim, further comprising a λ/4 - plate disposed on an optical axis of said emitted light beam between said light-reflecting means and said optical filter plate.

9. A filter according to any of Claims 1 to 7, further comprising a λ/4 - plate disposed on an optical axis of said reflected light beam between said light-reflecting means and said optical filter plate.

10. A filter according to any of Claims 1 to 7, further comprising a λ/8 - plate disposed on an optical axis of said emitted light beam between said light-reflecting means and said optical filter plate, and a λ/8 - plate disposed on an optical axis of said reflected light beam between said light-reflecting means and said optical filter plate.

11. A filter according to any preceding claim, wherein said means for rotating said optical filter plate comprises;
a stepping motor for rotating said optical filter plate, and
a control circuit for controlling said stepping motor so that said first optical fiber is optically coupled with said second optical fiber at a particular wavelength of a light beam incident on an input end of said first optical filter.
